# EUROPÄISCHE PATENTSCHRIFT

(11) **EP 0 605 456 B1**
(45) Veröffentlichungstag und Bekanntmachung des Hinweises auf die Patenterteilung: **20.12.1995**
(21) Anmeldenummer: 92918387.9
(22) Anmeldetag: 28.08.1992
(51) Int. Cl.: C06B 21/00, B01D 9/02

(54) **VERRINGERUNG DER KORNGRÖSSE VON KRISTALLINEM EXPLOSIVSTOFF**
REDUCTION OF THE GRAIN SIZE OF CRYSTALLINE EXPLOSIVES
REDUCTION DE LA GROSSEUR DES GRAINS D'UN PRODUIT EXPLOSIF CRISTALLIN

(30) Priorität: 18.09.1991 DE 4131072; 14.01.1992 DE 4200743
(43) Veröffentlichungstag der Anmeldung: 13.07.1994
(73) Patentinhaber: WASAGCHEMIE Sythen GmbH, D-45721 Haltern (DE)
(72) Erfinder: FELS, Gregor, D-4358 Haltern 1 (DE); EWALD, Gerhard, D-4358 Haltern 3 (DE)
(74) Vertreter: Lieck, Hans-Peter, Dipl.-Ing.
(86) Internationale Anmeldenummer: EP9201990
(87) Internationale Veröffentlichungsnummer: WO9306065

(56) Entgegenhaltungen:
- DE-A- 1 944 459
- DE-A- 2 336 004
- DE-B- 1 072 169
- GB-A- 473 057
- US-A- 1 801 509
- US-A- 2 204 059
- US-A- 2 346 116
- US-A- 2 421 778
- US-A- 2 867 647
- US-A- 3 173 818
- US-A- 3 954 526
- US-A- 4 150 900
- CHEMIE INGENIEUR TECHNIK Bd. 52, Nr. 7, 1980, NÜRNBERG Seiten 553 - 561 D.SCHLIEPHAKE 'Verfahren zur Kristallisation aus Lösungen'

## Beschreibung

Die Erfindung betrifft ein Verfahren und eine Vorrichtung zur Verringerung der Korngröße von kristallinem Explosivstoff, insbesondere Hexogen oder hexogenhaltiger Mischungen, bei welchem der Explosivstoff in einem organischen Lösungsmittel gelöst, anschließend der gelöste Explosivstoff in Anwesenheit von Wasser ausgefällt und kristallisiert wird und dann der umkristallisierte Explosivstoff von Lösemittel und Wasser getrennt wird.

Unter kristallinem Explosivstoff sind im Zusammenhang mit dieser Anmeldung in erster Linie Hexogen (RDX), ebenfalls Oktogen (HMX) und Nitropenta (PETN), aber auch jeder andere Explosivstoff, der in Kristallform vorliegt, sowie Mischungen solcher Explosivstoffe, zu verstehen.

Bei der Herstellung von Hexogen und anderen kristallinen Explosivstoffen fällt das Endprodukt in grob-kristalliner Form an. Für viele Anwendungsfälle, insbesondere als Bestandteil eines Treibladungspulvers, wird der kristalline Explosivstoff jedoch in fein-kristalliner Form benötigt.

Bei einem bekannten Verfahren zur Verringerung der Korngröße wird der kristalline Explosivstoff in einer Mühle unter Zugabe von Flüssigkeit gemahlen. Trotz der Flüssigkeitszugabe ist die mechanische Zerkleinerung des hochbrisanten Explosivstoffes als gefährlich einzustufen. Weiterhin ist bei dem bekannten Verfahren die Abtrennung der Feinfraktion lediglich mit Schwierigkeiten durchzuführen.

Aus der europäischen Patentanmeldung 0 340 188 ist bereits ein Verfahren der eingangs genannten Art bekannt, mit welchem sich die mittlere Korngröße von Hexogen und anderen kristallinen Explosivstoffen auf eine mittlere Kornfeinheit von unter 20 Mikrometer verringern lassen. Bei dem bekannten Verfahren wird der Explosivstoff, beispielsweise Hexogen, in einem Lösungsmittel und Wasser bei einer Temperatur zwischen 60°C und 70°C und unter Rühren gelöst. Unter Druckbeaufschlagung mit Stickstoff wird die Explosivstoff-Lösung in einen Wasserdampf-Ejektor gefördert. In dem Ejektor erfolgt die Kristallisation, wobei das Lösungsmittel verdampft und der Explosivstoff ausfällt. In einem nachgeschalteten Zyklon wird dann der ausgefällte, kristalline Explosivstoff abgetrennt. Mit dem bekannten Verfahren soll eine mittlere Korngröße von 8 Mikrometern erreichbar sein.

Der Erfindung liegt die Aufgabe zugrunde, ein Verfahren und eine Vorrichtung vorzuschlagen, mit denen sich sehr geringe Korngrößen erzielen lassen und wobei eine sehr hohe Anwendungssicherheit erreicht wird.

Diese Aufgabe wird erfindungsgemäß mit dem in Anspruch 1 gekennzeichneten Verfahren und mit der in Anspruch 13 gekennzeichneten Vorrichtung gelöst, wobei vorteilhafte Ausgestaltungen aus den jeweils sich anschließenden Unteransprüchen hervorgehen.

Bei dem erfindungsgemäßen Verfahren wird die Explosivstofflösung mit Kaltwasser zusammengeführt. Unter turbulentem Rühren erfolgt die Ausfällung und Kristallisation des Explosivstoffes. Dabei fällt der Explosivstoff in fein-kristalliner Form an. Für Hexogen lassen sich mit dem erfindungsgemäßen Verfahren mittlere Korngrößen von 4 bis 6 Mikrometern erzielen. Das gewonnene Endprodukt, das nach der Kristallisation noch von Lösemittel und Wasser getrennt werden muß, zeichnet sich durch eine hohe Handhabungssicherheit aus. Das erfindungsgemäße Verfahren bietet darüber hinaus eine hohe Anwendungssicherheit.

In Weiterbildung der Erfindung wird vorgesehen, daß das Kaltwasser eine Temperatur von unter 3°C hat. Zweckmäßig wird hierfür Eiswasser verwendet, das in einem separaten Eiswasserbehälter erzeugt wird. Vorteilhaft wird auch das Gefäß gekühlt, in dem die Ausfällung und Kristallisation stattfindet.

Das erfindungsgemäße Verfahren läßt sich ohne weiteres gemäß Anspruch 3 kontinuierlich in einem Reaktor durchführen.

Eine besonders wichtige Weiterbildung des Verfahrens besteht darin, daß zur Ausfällung des Explosivstoffes ein Fällungsmittel zugegeben wird, das das Kristallwachstum bremst. Hierdurch wird bei der Kristallisation ein Explosivstoff mit besonders geringer Korngröße gewonnen. Vorteilhaft wird als Fällungsmittel ein Abbauprodukt von Stärke, vorzugsweise Dextrin, eingesetzt. Es können aber auch wasserlösliche Derivate von Stärke oder Zellulose und/oder stark verdünnte Lösungen von verschiedenen Zuckern als Fällungsmittel zum Einsatz kommen. Der Zusatz des Fällungsmittels erfolgt vorteilhaft in einer Konzentration von 0,1 bis 3 Gewichtsprozent, vorzugsweise 0,5 bis 1 Gewichtsprozent, bezogen auf den eingesetzten Explosivstoff. Vorteilhaft wird das Fällungsmittel gemeinsam mit dem Kaltwasser oder Eiswasser einem Fällungsreaktor zugeführt, dem ebenfalls gelöster Explosivstoff zugegeben wird. Das Fällungsmittel bremst oder behindert das Kristallwachstum und führt zu vermehrt gleichmäßig abgerundeten Kristallen. Insbesondere der Einsatz von Dextrin hat sich als vorteilhaft erwiesen, da sich der Dextrin-Zusatz phlegmatisierend auswirkt, indem er die statische Aufladung des trockenen Explosivstoffes stark vermindert oder ganz unterbindet und außerdem die Reibungsempfindlichkeit des Explosivstoffes vermindert. Vorzugsweise wird ein Weißdextrin verwendet. Weißdextrine stehen in ihren Eigenschaften der Stärke nahe. Sie bestehen vorwiegend aus wenig verzweigten, verkürzten Molekülketten und lassen sich schnell und ohne Klumpenbildung in Wasser lösen.

Zur höchstmöglichen Nutzung des eingesetzten Lösungsmittels ist es vorteilhaft, wenn die Lösung des Explosivstoffes bei einer Temperatur erfolgt, die knapp unterhalb des Siedepunktes des Lösungsmittels liegt. Vorteilhaft können als Lösungsmittel Ketone, vorzugsweise nahezu wasserfreies Aceton, eingesetzt werden. Bei Verwendung von Aceton liegt das optimale Verhältnis des eingesetzten Acetons zum eingesetzten Wasser bei einem Volumen-Verhältnis von ca. 30/70. Bei geringerer Wassermenge kann die Kristallisation beeinträchtigt werden. Höhere Wassermengen sind möglich, machen aber die Wiedergewinnung des Acetons durch Destillation unnötig unwirtschaftlich.

In Weiterbildung des erfindungsgemäßen Verfahrens wird vorgesehen, daß zur Abtrennung des ausgefällten Explosivstoffes die erhaltene Mischung aus Explosivstoff, Lösungsmittel und Wasser gefiltert wird. Die Filtration kann beispielsweise auf einem Vakuum-Bandfilter durchgeführt werden.

Um ein Zusammenbacken während der anschließenden Trocknung zu verhindern ist es notwendig, daß vor und/oder während der Filtration der Mischung aus Explosivstoff, Lösungsmittel und Wasser ein Benetzungsmittel zugesetzt wird. Vorteilhaft kann als Benetzungsmittel eine Mischung aus anionischen und nichtionischen Tensiden verwendet werden.

Um eine besonders wirtschaftliche Verfahrensführung zu erzielen ist es vorteilhaft, wenn das bei der Filtration gewonnene Filtrat zur Rückgewinnung des hierin enthaltenen Lösungsmittels aufbereitet wird. Dies kann beispielsweise in einem dem Filtrationsschritt nachgeschalteten Destillationsprozess geschehen.

Hinsichtlich der Vorrichtung wird zur Lösung der erfindungsgemäßen Aufgabe eine Vorrichtung mit den Merkmalen des Patentanspruches 13 vorgeschlagen.

Die erfindungsgemäße Vorrichtung zeichnet sich durch einen Reaktor aus, in dem die Ausfällung und Kristallisation des gelösten Explosivstoffes stattfindet und der mit einer Kühlung und einem turbulenten Rührwerk versehen ist. Zur Erhöhung der Turbulenz kann der Reaktor vorteilhaft eingebaute Schikanen aufweisen. Die Kühlung sollte vorzugsweise derart einstellbar sein, daß die Umkristallisation bei einer Temperatur von 1°C bis 2°C durchführbar ist.

Bei der erfindungsgemäßen Vorrichtung wird dem Reaktor einerseits gelöster Explosivstoff und andererseits Kaltwasser, insbesondere Eiswasser, zugeführt. Die Ausfällung des Explosivstoffes erfolgt dann unter turbulentem Rühren. Anschließend wird der umkristallisierte Explosivstoff einem nachgeschalteten Prozeß zugeführt, indem eine Abtrennung des Lösungsmittels und des Wassers erfolgt.

In vorteilhafter Weiterbildung wird vorgesehen, daß der Reaktor mit einer kontinuierlichen Zuführung für gelösten Explosivstoff und Kaltwasser und einer kontinuierlichen Abführung für den umkristallisierten Explosivstoff ausgebildet ist.

In weiterer Ausgestaltung ist dem Reaktor mindestens eine Fest-Flüssig-Trenneinrichtung, insbesondere ein Vakuum-Bandfilter, nachgeschaltet, an der die Abtrennung des ausgefällten Explosivstoffes erfolgt. Vorteilhaft wird an dem Bandfilter eine Einrichtung zur Zuführung eines Benetzungsmittels vorgesehen.

Die Fest-Flüssig-Trenneinrichtung kann eine Filtratsammeleinrichtung aufweisen, die vorteilhaft mit einer Rückgewinnungseinrichtung für das Lösungsmittel im Filtrat verbunden ist. Zweckmäßig umfaßt die Rückgewinnungseinrichtung eine Destillationseinrichtung, in der das im Filtrat enthaltenen Lösungsmittel abgetrennt wird.

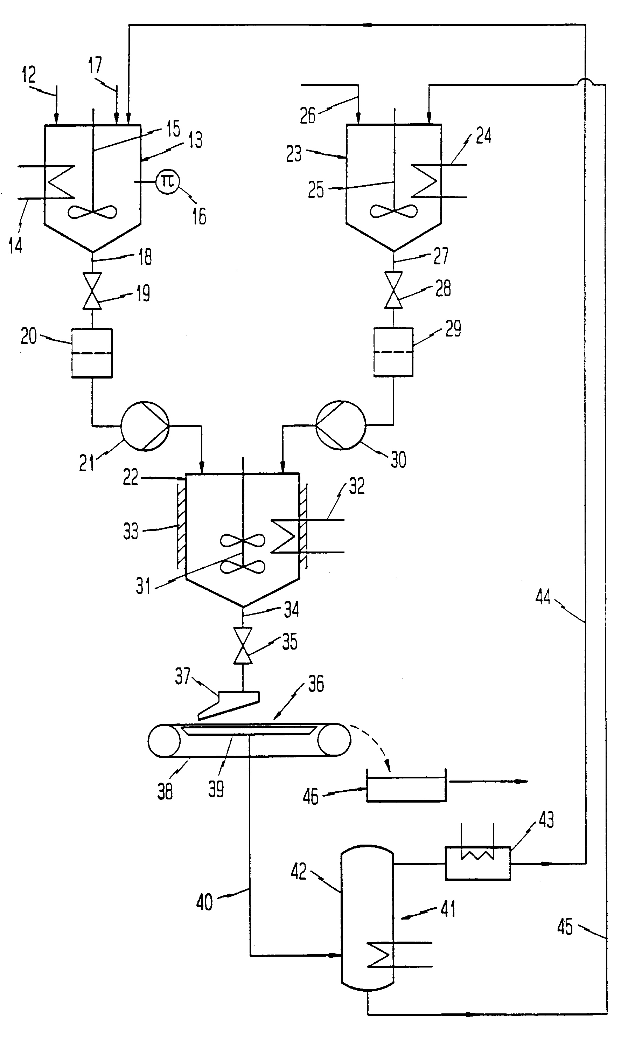

Weitere Merkmale und Vorteile der Erfindung ergeben sich aus einem in der Zeichnung dargestellten Ausführungsbeispiel einer erfindungsgemäßen Vorrichtung. Hierbei zeigt die Zeichnung ein schematisches Fließbild der erfindungsgemäßen Vorrichtung.

Mit der in der Zeichnung schematisch dargestellten Vorrichtung ist es möglich, aus grob-kristallinem Hexogen (RDX), das auch einen Oktogenanteil aufweisen kann, fein-kristallines Hexogen herzustellen. Mit der dargestellten Vorrichtung und den hierin durchgeführten Verfahrenschritten ist insbesondere feinkristallines Hexogen mit einer mittleren Kornfeinheit von 4 bis 6 Mikrometern herstellbar.

Das grob-kristalline mit mindestens 15 % Wasser phlegmatisierte Hexogen wird über eine nicht dargestellte Dosiereinrichtung an einem Einlaß 12 einem Lösungsbehälter 13 zugeführt. Der Lösungsbehälter 13 ist mit einer Heizeinrichtung 14 und mit einem Rührwerk 15 versehen. Weiterhin ist an dem Lösungsbehälter 13 eine Temperaturregelung 16 angeordnet. An einem Einlaß 17 des Lösungsbehälters 13 erfolgt die Zuführung von möglichst wasserfreiem Aceton.

Die Lösung des Explosivstoffes erfolgt in dem Lösungsbehälter 13 bei einer Temperatur, die knapp unterhalb des Siedepunktes des Lösungsmittels liegt. Der Temperaturregler 16 kann somit beispielsweise bei Verwendung von nahezu wasserfreiem Aceton als Lösungsmittel auf etwa 58°C eingestellt werden.

Über einen Auslaß 18 und ein Ventil 19 wird der gelöste Explosivstoff anschließend einem Filter 20 zugeführt. Eine Dosierpumpe 21 fördert den gelösten Explosivstoff dann zu einem Fällungsreaktor 22.

In einem Eiswasserbehälter 23, der mit einer Kühleinrichtung 24 und einem Rührwerk 25 versehen ist, wird Kaltwasser oder Eiswasser hergestellt. Dem Eiswasser, das eine Temperatur von unter 3°C hat, wird an einem Einlaß 26 des Eiswasserbehälters 23 eine Dextrin-Lösung zugesetzt. Bezogen auf den eingesetzten Explosivstoff wird ein Dextrin-Zusatz von 0,5 bis 1 Gewichtsprozent zugegeben. Vorzugsweise wird ein Weißdextrin verwendet. Weißdextrine stehen in ihren Eigenschaften der Stärke nahe. Sie bestehen vorwiegend aus wenig verzweigten, verkürzten Molekülketten und lassen sich schnell und ohne Klumpenbildung im Wasser lösen. Anstelle von Dextrinen sind als Fällungsmittel auch andere wasserlösliche Derivate von Stärke oder Zellulose einsetzbar. Auch stark verdünnte Lösungen verschiedener Zucker können Verwendung finden.

Das dem Eiswasserbehälter 23 zugeführte Fällungsmittel wird durch das Rührwerk 25 mit dem Eiswasser vermischt. Mittels einer weiteren Dosierpumpe 30 wird die Mischung aus Eiswasser und Fällungsmittel über einen Auslaß 27, ein Ventil 28 und ein Filter 29 dem Fällungsreaktor 22 zugeführt.

Der Fällungsreaktor 22 besitzt eingebaute Schikanen und ein Rührwerk 31, das einen turbulenten Rühreintrag gestattet. Weiterhin ist an dem Fällungsreaktor 22 eine Kühleinrichtung 32 vorgesehen. An der Außenwand des Fällungsreaktors 22 ist eine Isolierung 33 aufgebracht.

In dem Fällungsreaktor 22 wird der gelöste Explosivstoff mit dem im Fällungsmittel enthaltenen Eiswasser unter turbulentem Rühren zusammengeführt. Die Ausfällung des Explosivstoffes erfolgt bei einer Temperatur von weniger als 10°C. Hierbei bremst oder behindert der Dextrin-Zusatz das Kristallwachstum und führt zu vermehrt gleichmäßig abgerundeten Kristallen. Die bei dieser Verfahrenführung stattfindende Ausfällung und Kristallisation führt zu einem in fein-kristallisierter Form vorliegenden Explosivstoff.

Über einem am Fällungsreaktor 22 vorgesehenen Auslaß 34 und ein Ventil 35 wird die erhaltene Mischung aus Explosivstoff, Lösungsmittel und Wasser beispielsweise einem Vakuum-Bandfilter 36 zugeführt. Die Zugabe der Mischung erfolgt über eine Zuführeinrichtung 37, die oberhalb des Bandes 38 des Vakuum-Bandfilters angeordnet ist. Über eine Absaugeinrichtung 39 und eine Leitung 40 wird das erhaltene Filtrat einer Rückgewinnungseinrichtung 41 für das im Filtrat enthaltene Lösungsmittel zugeführt. Die Rückgewinnungseinrichtung 41 ist bei dem dargestellten Ausführungsbeispiel als kontinuierlich betriebene Destillationseinrichtung ausgeführt. In einer Destillationskolonne 42 erfolgt die Abtrennung des im Filtrat enthaltenen Lösungsmittels. Dieses wird an einem Kondensator 43 kondensiert und über eine Leitung 44 in den Lösungsbehälter 13 rückgeführt. Das an der Destillationskolonne 42 anfallende Prozeßwasser wird über eine Leitung 45 in den Eiswasserbehälter 23 rückgeführt.

An dem Vakuum-Bandfilter 36 erfolgt über eine nicht dargestellte Einrichtung die Zugabe eines Benetzungsmittels. Bei dem dargestellten Ausführungsbeispiel kommen als Benetzungsmittel anionische und nicht ionische Tenside zum Einsatz. Das Benetzungsmittel verhindert insbesondere während der Trocknung des gewonnenen Feststoffes weitgehend ein Zusammenbacken der Feststoffpartikeln.

Der gewonnene Explosivstoff wird von dem Vakuum-Bandfilter 36 in einen Auffangbehälter 46 überführt. Durch den Dextrin-Zusatz kann die statische Aufladung des trockenen Explosivstoffes bzw. des Hexogens stark vermindert oder ganz unterbunden werden. Somit wirkt der Dextrin-Zusatz auch phlegmatisierend. Weiterhin wird auch die Reibungsempfindlichkeit des Explosivstoffes vermindert.

Das vorstehend beschriebene Verfahren kann ohne weiteres kontinuierlich durchgeführt werden. Es zeichnet sich durch eine hohe Anwendungssicherheit aus. Der erhaltene in fein-kristalliner Form vorliegende Explosivstoff liegt mit einer mittleren Kornfeinheit von 4 bis 6 Mikrometern vor. Somit eignet sich der erhaltene Explosivstoff für viele Anwendungsfälle, z.B. als Bestandteil eines Treibladungspulvers.

## Patentansprüche

1. Verfahren zur Verringerung der Korngröße von kristallinem Explosivstoff, insbesondere Hexogen oder hexogenhaltiger Mischungen, bei welchem der Explosivstoff in einem organischen Lösungsmittel gelöst,
anschließend der gelöste Explosivstoff in Anwesenheit von Wasser unter Rühren ausgefällt und kristallisiert wird,
dann der erhaltene umkristallisierte Explosivstoff von Lösemittel und Wasser getrennt wird,
die Explosivstofflösung mit Kaltwasser zusammengeführt wird, und dann die Ausfällung und Kristallisation des Explosivstoffes unter turbulentem Rühren erfolgt,
dadurch gekennzeichnet,
daß zur Ausfällung des Explosivstoffes als Fällungsmittel ein Abbauprodukt von Stärke, vorzugsweise Dextrin, oder wasserlösliche Derivate von Stärke oder Zellulose und/oder stark verdünnte Lösungen von verschiedenen Zuckern zugegeben wird,
und daß vor und/oder während der Abtrennung der Mischung aus Explosivstoff, Lösungsmittel und Wasser ein Benetzungsmittel zugesetzt wird, um ein Zusammenbacken der Feststoffpartikel zu verhindern.

2. Verfahren nach Anspruch 1,
dadurch gekennzeichnet,
daß das Kaltwasser eine Temperatur von unter 3°C hat.

3. Verfahren nach Anspruch 1 oder 2,
dadurch gekennzeichnet,
daß die Ausfällung des Explosivstoffes in einem Reaktor durchgeführt wird, dem kontinuierlich Explosivstofflösung und Kaltwasser zugeführt werden und aus dem kontinuierlich ausgefällter Explosivstoff abgezogen wird.

4. Verfahren nach einem der Ansprüche 1 bis 3,
dadurch gekennzeichnet,
daß das Fällungsmittel in einer Konzentration von 0,1 bis 3 Gewichtsprozent, vorzugsweise 0,5 bis 1 Gewichtsprozent, bezogen auf den eingesetzten Explosivstoff, beigegeben wird.

5. Verfahren nach einem der Ansprüche 1 bis 4,
dadurch gekennzeichnet,
daß die Ausfällung des Explosivstoffes bei einer Temperatur von weniger als 10°C durchgeführt wird.

6. Verfahren nach einem der Ansprüche 1 bis 5,
dadurch gekennzeichnet,
daß die Lösung des Explosivstoffes im Lösungsmittel unter Wärmezufuhr und Rühren erfolgt.

7. Verfahren nach Anspruch 6,
dadurch gekennzeichnet,
daß die Lösung des Explosivstoffes bei einer Temperatur erfolgt, die knapp unterhalb des Siedepunktes des Lösungsmittels liegt.

8. Verfahren nach einem der Ansprüche 1 bis 7,
dadurch gekennzeichnet,
daß als Lösungsmittel Ketone, vorzugsweise nahezu wasserfreies Aceton, eingesetzt wird.

9. Verfahren nach Anspruch 8,
dadurch gekennzeichnet,
daß Aceton und Kaltwasser im Volumen-Verhältnis von ca. 30/70 eingesetzt werden.

10. Verfahren nach einem der Ansprüche 1 bis 9,
dadurch gekennzeichnet,
daß zur Abtrennung des ausgefällten Explosivstoffes die erhaltene Mischung aus Explosivstoff, Lösungsmittel und Wasser gefiltert wird.

11. Verfahren nach einem der Ansprüche 1 bis 10,
dadurch gekennzeichnet,
daß als Benetzungsmittel eine Mischung aus anionischen und nicht-ionischen Tensiden verwendet wird.

12. Verfahren nach einem der Ansprüche 10 oder 11,
dadurch gekennzeichnet,
daß das bei der Filtration erhaltene Filtrat zur Rückgewinnung des Lösungsmittels aufbereitet wird.

13. Vorrichtung zur Durchführung des Verfahrens nach einem oder mehreren der Ansprüche 1 bis 12,
mit einem Reaktor (22) zum Ausfällen und Kristallisieren, der mit einer Kühlung (32) und einem Rührwerk (31) versehen ist, dadurch gekennzeichnet,
daß dem Reaktor (22) ein Lösungsbehälter (13) zur Lösung des Explosivstoffes vorgeschaltet ist, der mit einer Heizeinrichtung (14) und mit einem Rührwerk (15) versehen ist,
daß dem Reaktor (22) ein Eiswasserbehälter (23) zur Herstellung von Kaltwasser vorgeschaltet ist, der mit einer Kühleinrichtung (24) und einem Rührwerk (25) versehen ist,
daß das am Reaktor (22) vorgesehene Rührwerk als turbulentes Rührwerk (31) ausgebildet ist,
daß dem Reaktor (22) ein Vakuum-Bandfilter (36) nachgeschaltet ist, an dem die Abtrennung des Explosivstoffes erfolgt,
daß an dem Vakuum-Bandfilter (36) eine Einrichtung zur Zuführung eines Benetzungsmittels vorgesehen ist,
daß dem Vakuum-Bandfilter (36) eine Filtratsammeleinrichtung (39) zugeordnet ist, die mit einer Rückgewinnungseinrichtung (41) für das im Filtrat vorliegende Lösungsmittel verbunden ist, und
daß eine erste Rückführleitung (44) für das rückgewonnene Lösungsmittel zu dem Lösungsbehälter (13) und eine zweite Rückführleitung (45) für das anfallende Prozeßwasser zu dem Eiswasserbehälter (23) vorgesehen sind.

14. Vorrichtung nach Anspruch 13,
dadurch gekennzeichnet,
daß der Reaktor (22) mit die Turbulenz erhöhenden Schikanen ausgebildet ist.

15. Vorrichtung nach Anspruch 13 oder 14,
dadurch gekennzeichnet,
daß der Reaktor (22) mit einer kontinuierlichen Zuführung für gelösten Explosivstoff und Kaltwasser und einer kontinuierlichen Abführung für den umkristallisierten Explosivstoff ausgebildet ist.

16. Vorrichtung nach einem der Ansprüche 13 bis 15,
dadurch gekennzeichnet,
daß die Rückgewinnungseinrichtung eine Destillationseinrichtung (42) umfaßt.

## Claims

1. A method of reducing the grain size of crystalline explosive, especially hexogen or mixtures containing hexogen, wherein the explosive is dissolved in an organic solvent,
the dissolved explosive subsequently is precipitated and crystallized in the presence of water,
then the resulting recrystallized explosive is separated from solvent and water,
the explosive solution is brought together with cold water, and then the precipitation and crystallization of the explosive occur while turbulent stirring is effected,
**characterized** in that a decomposition product of starch, preferably dextrin, or derivatives of starch or cellulose which are soluble in water, and/or greatly diluted solutions of different sugars is added as precipitant to precipitate the explosive, and that a wetting agent is added to the mixture of explosive, solvent, and water before and/or during the separation to prevent agglomeration of the solid particles.

2. The method as claimed in claim 1, characterized in that the cold water has a temperature of below 3° C.

3. The method as claimed in claim 1 or 2, characterized in that the precipitation of the explosive is carried out in a reactor which is fed continuously with explosive solution and cold water and from which precipitated explosive is withdrawn continuously.

4. The method as claimed in any one of claims 1 to 3, characterized in that the precipitant is added at a concentration of from 0.1 to 3 % by weight, preferably 0.5 to 1 % by weight, based on the explosive used.

5. The method as claimed in any one of claims 1 to 4, characterized in that the precipitation of the explosive is carried out at a temperature of less than 10° C.

6. The method as claimed in any one of claims 1 to 5, characterized in that the dissolving of the explosive in the solvent occurs while heat is supplied and stirring effected.

7. The method as claimed in claim 6, characterized in that the dissolving of the explosive occurs at a temperature just below the boiling point of the solvent.

8. The method as claimed in any one of claims 1 to 7, characterized in that the solvent used is ketones, preferably acetone which is nearly anhydrous.

9. The method as claimed in claim 8, characterized in that acetone and cold water are used at a volume ratio of approximately 30/70.

10. The method as claimed in any one of claims 1 to 9, characterized in that the resulting mixture of explosive, solvent, and water is filtered to separate the precipitated explosive.

11. The method as claimed in any one of claims 1 to 10, characterized in that the wetting agent used is a mixture of anionic and non-ionic surfactants.

12. The method as claimed in any one of claims 10 or 11, characterized in that the filtrate obtained from the filtration is treated so as to recover the solvent.

13. An apparatus for carrying out the method as claimed in any one or more of claims 1 to 12,
comprising a reactor (22) for precipitation and crystallization provided with cooling (32) and an agitator (31),
**characterized** in that a solvent container (13) for dissolving the explosive is connected upstream of the reactor (22) and provided with a heater means (14) and an agitator (15),
that an ice water container (23) for making cold water is connected upstream of the reactor (22) and provided with a cooling means (24) and an agitator (25),
that the agitator provided at the reactor (22) is embodied by a turbulent agitator (31),
that a vacuum belt filter (36) at which the separation of the explosive takes place is connected downstream of the reactor (22),
that a means for feeding a wetting agent is provided at the vacuum belt filter (36),
that a filtrate collecting means (39) is associated with the vacuum belt filter (36) and connected to a recovering means (41) for the solvent present in the filtrate, and
that a first return conduit (44) for the recovered solvent is provided towards the solvent container (13) and a second return conduit (45) for the process water accumulated is provided towards the ice water container (23).

14. The apparatus as claimed in claim 13, characterized in that the reactor (22) is formed with baffle plates increasing the turbulence.

15. The apparatus as claimed in claim 13 or 14, characterized in that the reactor (22) is designed with continuous feeding of dissolved explosive and cold water and with continuous discharge of the recrystallized explosive.

16. The apparatus as claimed in any one of claims 13 to 15, characterized in that the recovering means comprises a distilling means (42).

## Revendications

1. Procédé pour la réduction de la grosseur des grains d'une matière explosive cristalline, en particulier de l'hexogène ou des mélanges contenant de l'hexogène, procédé selon lequel la matière explosive est dissoute dans un solvant organique, l'explosif dissout est ensuite précipité et cristallisé par agitation en présence d'eau et la matière explosive recristallisée obtenue est séparée du solvant et de l'eau, la solution de matière explosive est mélangée à de l'eau froide et l'agitation par turbulence provoque la précipitation et la cristallisation de la matière explosive,
caractérisé
en ce que, pour la précipitation de la matière explosive on ajoute, en tant que précipitant, un produit de dégradation de l'amidon, de préférence de la dextrine ou des dérivés d'amidon ou de cellulose solubles dans l'eau et/ou des solutions fortement diluées de différents sucres,
et en ce que, pour éviter une cuisson des particules solides, on ajoute avant et/ou pendant la séparation du mélange de matière explosive, de solvant et d'eau, un agent humectant.

2. Procédé selon la revendication 1,
caractérisé en ce que
l'eau froide est à une température inférieure à 3°C.

3. Procédé selon la revendication 1 ou 2,
caractérisé en ce que
la précipitation de la matière explosive est effectuée dans un réacteur qui est alimenté en continu en solution de matière explosive et en eau froide et d'où est extraite la matière explosive précipitée en continu.

4. Procédé selon l'une des revendications 1 à 3,
caractérisé en ce que
le précipitant est ajouté dans une concentration pondérale de 0,1 à 3 pour cent, de préférence 0,5 à 1 pour cent en poids par rapport à la matière explosive utilisée.

5. Procédé selon l'une des revendications 1 à 4,
caractérisé en ce que
la précipitation de la matière explosive est effectuée à une température inférieure à 10°C.

6. Procédé selon l'une des revendications 1 à 5,
caractérisé en ce que
la dissolution de matière explosive dans le solvant se produit sous apport de chaleur et par agitation.

7. Procédé selon la revendication 6,
caractérisé en ce que
la dissolution de matière explosive se déroule à une température juste en dessous de celle d'ébullition du solvant.

8. Procédé selon l'une des revendications 1 à 7,
caractérisé en ce que
la cétone est utilisée en tant que solvant, de préférence de l'acétone quasiment anhydre.

9. Procédé selon la revendication 8,
caractérisé en ce que
l'acétone et l'eau froide sont appliquées dans un rapport volumique d'environ 30/70.

10. Procédé selon l'une des revendications 1 à 9,
caractérisé en ce que
pour la séparation de la matière explosive précipitée, le mélange obtenu à partir de matière explosive, de solvant et d'eau est filtré.

11. Procédé selon l'une des revendications 1 à 10,
caractérisé en ce qu'
un mélange de dérivés tensio-actifs anioniques et non ioniques est utilisé en tant qu'agent humectant.

12. Procédé selon l'une des revendications 10 ou 11,
caractérisé en ce que
le filtrat, obtenu au cours de la filtration, est traité pour le recyclage du solvant.

13. Dispositif pour la mise en oeuvre du procédé selon une ou plusieurs des revendications 1 à 12,
comprenant un réacteur (22), pour la précipitation et la cristallisation, qui est muni d'une réfrigération (32) et d'un agitateur (31), caractérisé
en ce que le réacteur (22) succède à un réservoir de solvant (13), pour la dissolution de la matière explosive, réservoir qui est muni d'un dispositif de chauffage (14) et d'un agitateur (15),
en ce que le réacteur (22) succède à un réservoir d'eau glacée (23), pour la production d'eau froide, qui est équipé d'un dispositif de refroidissement (24) et d'un agitateur (25),
en ce que l'agitateur prévu sur le réacteur (22) est un agitateur à turbulence (31),
en ce que le réacteur (22) précède un filtre à bande sous vide (36) où se produit la séparation de la matière explosive, en ce qu'il est prévu, sur le filtre à bande sous vide (36), un dispositif pour l'apport d'un agent humectant,
en ce que le filtre à bande sous vide (36) est associé à un dispositif collecteur de filtrat (39) qui est relié à un dispositif de recyclage (41) pour le solvant contenu dans le filtrat,
et
en ce qu'une première conduite de recirculation (44) pour le solvant recyclé est reliée au réservoir de solvant (13) et en ce qu'une seconde conduite de recirculation (45) pour l'eau de processus est reliée au réservoir d'eau glacée (23).

14. Dispositif selon la revendication 13,
caractérisé en ce que,
le réacteur (22) est muni de chicanes augmentant la turbulence.

15. Dispositif selon la revendication 13 ou 14,
caractérisé en ce que,
le réacteur (22) est muni d'une alimentation continue pour la matière explosive dissoute et pour l'eau froide et d'une évacuation continue pour la matière explosive recristallisée.

16. Dispositif selon l'une des revendications 13 à 15,
caractérisé en ce que
le dispositif de recyclage comprend un dispositif de distillation (42).
